# EUROPÄISCHE PATENTSCHRIFT

(11) **EP 1 031 443 B1**
(45) Veröffentlichungstag und Bekanntmachung des Hinweises auf die Patenterteilung: **20.11.2002**
(21) Anmeldenummer: 99103649.2
(22) Anmeldetag: 25.02.1999
(51) Int. Cl.: B60D 1/60, B60D 1/06

(54) **Kugelkopfkupplung für einen Anhänger**
Ball hitch for trailer
Rotule d'attelage pour remorque

(43) Veröffentlichungstag der Anmeldung: 30.08.2000
(73) Patentinhaber: Albe Berndes GmbH Zugkugelkupplungen, 32312 Lübbecke (DE)
(72) Erfinder: Berndes, Karl-Josef, 32312 Lübbecke (DE)
(74) Vertreter: Stracke, Alexander, Dipl.-Ing.

(56) Entgegenhaltungen:
- DE-U- 1 980 036
- DE-U- 1 986 357
- FR-A- 1 465 799
- FR-A- 2 420 441
- GB-A- 2 006 143
- GB-A- 2 098 557
- US-A- 2 971 777
- US-A- 2 982 567

## Beschreibung

Die vorliegende Erfindung betrifft eine Kugelkopfkupplung für einen Anhänger gemäß dem Oberbegriff des Anspruchs 1.

Aus der GB 2 006 143 A ist eine Kugelkopfkupplung bekannt, deren Handgriff aus Vollmaterial gebildet ist und bei der eine bolzenförmige Schließeinrichtung in Schließstellung außenseitig an dem der Kugelpfanne zugewandten Rücken des Handgriffs anliegt. Bei einer weiteren bekannten Kugelkopfkupplung besteht das Sicherungsteil aus einer Sperrklinke, die drehbeweglich am Handgriff gelagert ist und die sich in Schließstellung der Kugelpfanne an der Oberseite des Kupplungsgehäuses abstützt.

Bei einer bekannten Kugelkopfkupplung besteht das Sicherungsteil aus einer Sperrklinke, die drehbeweglich im Handgriff gelagert ist und die sich in Schließstellung der Kugelpfanne an der Oberseite des Kupplungsgehäuses abstützt.

Bei eingesetzter Schließeinrichtung greift diese in die Sperrklinke ein, wodurch eine Fixierung zwischen ihr und dem Handgriff erfolgt, durch die verhindert wird, daß die Sperrklinke betätigt werden kann. Der Handgriff bleibt dadurch blockiert und dessen Betätigung zum Öffnen der Kugelpfanne ist somit ausgeschlossen.

Die bekannten Sperrklinken sind dabei so angeordnet, daß sie von der Unterseite des Handgriffs her bedienbar sind, daß heißt, daß sie durch Ziehen gegen den Handgriff aus ihrer Verrastungsstellung gelöst werden, wobei ihre angeformte Sperrnase, die sich in Arretierstellung, im vorderen Stirnbereich aus dem Handgriff heraustretend, am Kupplungsgehäuse abstützt, zum Handgriff hin verschwenkt wird und sich so aus der Arretierstellung bewegt.

Allerdings ist die Handhabung dieser Sperrklinke sehr unpraktisch, da sie beim Umgreifen des Handgriffs, beispielsweise zum Rangieren des Anhängers, ständig an den Fingern anliegt und von diesen zwangsläufig in den Handgriff hineingedrückt wird. Aus naheliegenden Gründen ist dies für den Benutzer äußerst unangenehm, zumal die Sperrklinke unter Federspannung steht, die beim Betätigen der Sperrklinke überwunden werden muß.

Ein weiterer erheblicher Nachteil der bekannten Kugelkopfkupplung liegt darin, daß die eingesteckte Schließeinrichtung ohne große Mühe von einem Unbefugten unbrauchbar gemacht werden kann. Hierzu ist lediglich ein Schlag auf die von außen frei zugängliche Sperrnase notwendig, die dazu führt, daß sich die bolzenartige Schließeinrichtung, üblicherweise ein Steckschloß verbiegt.

Allerdings kann auch der Fall eintreten, daß die Schließeinrichtung aufgrund ihrer Verbiegung nicht mehr aus dem Handgriff herausziehbar ist und dieses nur durch Zerstörung, entweder der Schließeinrichtung oder gar des Handgriffs entfernbar ist.

Der vorliegenden Erfindung liegt daher die Aufgabe zugrunde, eine Kugelkopfkupplung der gattungsgemäßen Art so auszubilden, daß ihre Handhabung, insbesondere beim Betätigen des Handgriffs verbessert sowie eine mutwillige Zerstörung der Schließeinrichtung weitgehend ausgeschlossen ist.

Diese Aufgabe wird durch eine Kugelkopfkupplung gelöst, die die Merkmale des Anspruchs 1 aufweist.

Die konstruktive Ausgestaltung der Kugelkopfkupplung gemäß dem Anspruch 1 verhindert wirksam, daß durch außenseitige Gewaltanwendung, beispielsweise durch Schlagen auf die Sperrnase die Schließeinrichtung beschädigt wird.
Dabei stützt sich der Bolzen der Schließeinrichtung über einen längeren Bereich an der Innenwandung des Handgriffs ab, wodurch die bei einem gewaltsamen Angriff auftretenden Biegekräfte problemlos aufgenommen werden.

Dabei kann der Bolzen der Schließeinrichtung sowohl durch die Seitenwandungen des Handgriffs als auch durch die Sperrklinke selbst geführt sein, wozu in der Sperrklinke eine entsprechende Durchstecköffnung vorzusehen ist, die, bei Verwendung eines bekannten Steckschlosses schlüssellochförmig ausgebildet ist.

Denkbar ist aber auch, den Bolzen der Schließeinrichtung ausschließlich durch die Seitenwandungen des Handgriff zu führen, während sich die Sperrklinke mit ihrer Außenkante so an den Bolzen abstützt, daß deren Verschwenkbarkeit blockiert ist.

Durch die Anordnung der Sperrklinke in dem Sinne, daß sie ein oberseitig aus dem Handgriff herausragendes Druckteil bildet, ist eine gegenüber dem Stand der Technik wesentlich einfachere und angenehmere Handhabung der Sperrklinke und des Handgriffs bei dessen Hochschwenken möglich.

So reicht zur Lösung der Blockierstellung lediglich ein Daumendruck auf das Druckteil der Sperrklinke, um den Handgriff verschwenken zu können. Anschließend kann das Druckteil entlastet werden; die Hand steht dann vollständig für die Handhabung des Handgriffs zur Verfügung. Weitere vorteilhafte Ausbildungen der Erfindung sind in den Unteransprüchen gekennzeichnet.

Ein Ausführungsbeispiel der Erfindung wird nachfolgend anhand der beigefügten Zeichnungen beschrieben.

Es zeigen:
- Figuren 1 u. 2.: eine erfindungsgemäße Kugelkopfkupplung jeweils in einer anderen Funktionsstellung, in einer geschnittenen Seitenansicht.

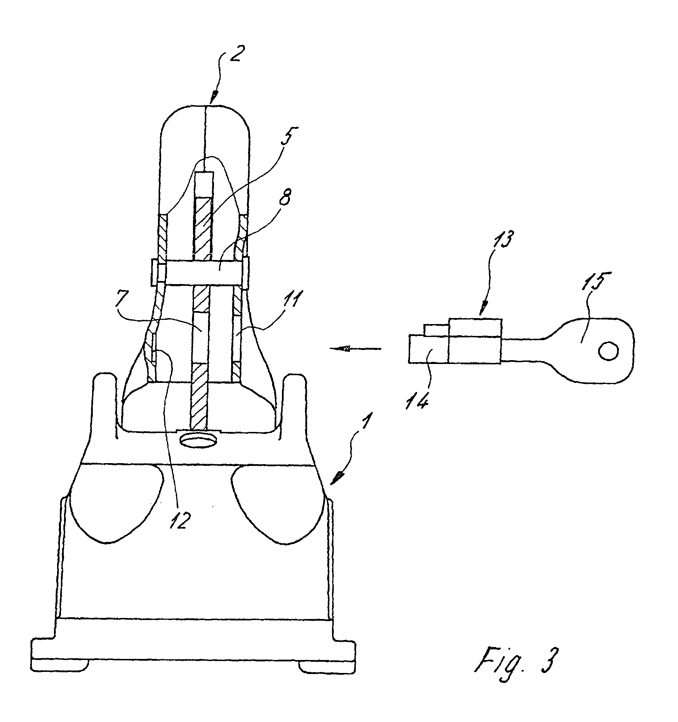

- Figur 3: die Kugelkopfkupplung in einer zu öffnenden Stellung in einer teilweise geschnittenen Vorderansicht.

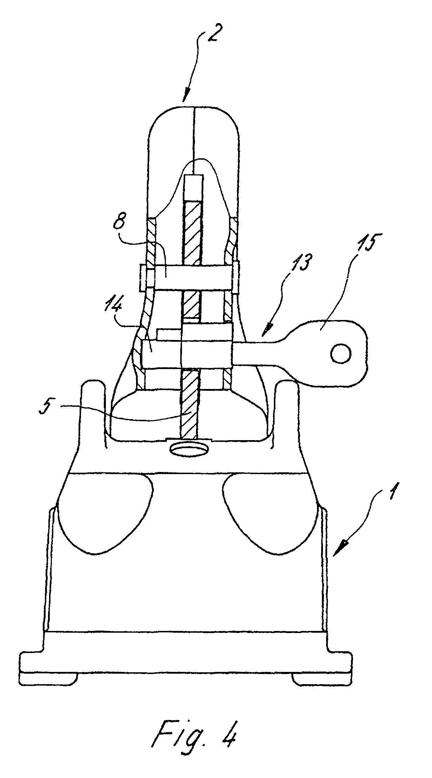

- Figur 4: die Kugelkopfkupplung in einer blockierten Stellung, gleichfalls in einer teilweise geschnittenen Vorderansicht.

In den Figuren ist eine Kugelkopfkupplung dargestellt, die ein Kupplungsgehäuse 1 aufweist, daß mit einer nicht dargestellten Deichsel eines Anhängers verbindbar ist.

An den diesem Kupplungsgehäuse 1 ist schwenkbar und federbelastet ein Handgriff 2 festgelegt, durch den eine Kugelpfanne 4 von einer Schließ- in eine Offenstellung bringbar ist.

Der Handgriff 2 besteht aus zwei miteinander verbundenen Halbschalen, die an einem Ende als Griffteil 3 ausgebildet sind.

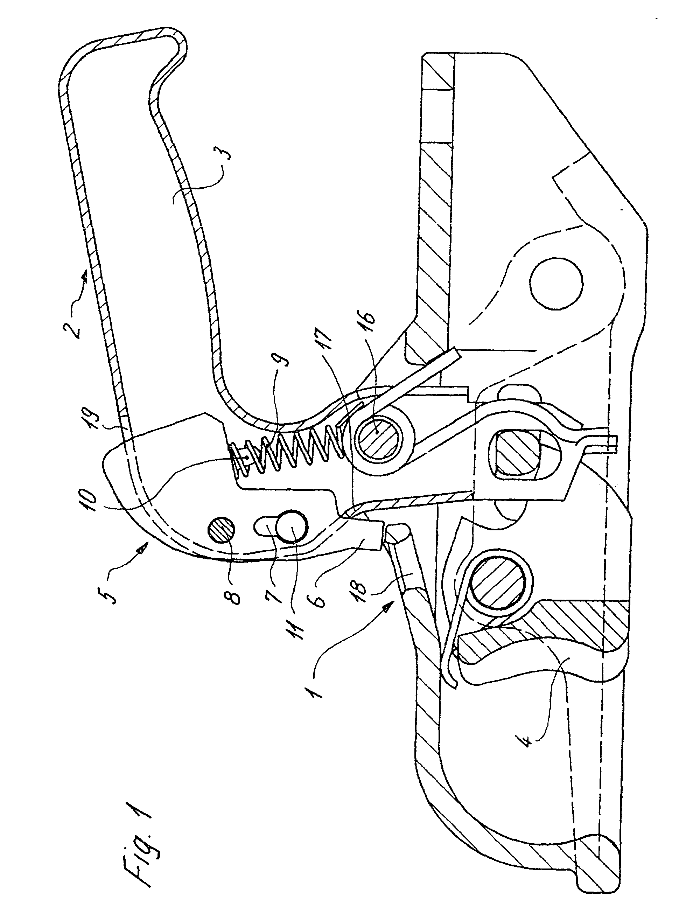

In vorderen, der Kugelpfanne 4 zugewandten Stirnseitenbereich des Handgriffs 2 ist an einem Schwenkbolzen 8 eine Sperrklinke 5 schwenkbar befestigt, die eine Sperrnase 6 aufweist, die in einer in der Figur 1 gezeigten Blockierstellung an der Oberseite des Kupplungsgehäuses 1 anliegt.
Dabei wird die Sperrklinke 5 durch eine Feder 9 in dieser Position gehalten, die einerseits an einer Schwenkachse 16, die die Lagerung zwischen dem Handgriff 2 und dem Kupplungsgehäuse 1 bildet, und andererseits an einem Zäpfchen 10 der Sperrklinke 5 festgelegt ist. Die Feder 9 kann statt an der Schwenkachse 16 auch aus oder an anderen geeigneten Stellen, befestigt sein.

Zur Festsetzung des Handgriffs 2 in der in der Figur 1 gezeigten Blockierstellung wird eine Schließeinrichtung 13, die aus einem Schließbolzen 14 und einem diesen betätigenden Schlüssel 15 besteht, seitlich durch eine Einstecköffnung 11, eine Durchstecköffnung 7 der Sperrklinke 5 in eine gegenüber der Einstecköffnung 11 angeordnete Ausnehmung 12 des Handgriffs 2 eingeführt und verriegelt. Die Schließeinrichtung 13 ist dabei als Steckschloß ausgebildet, das eine Festsetzung der Sperrklinke 5 gegenüber dem Handgriff 2 ermöglicht.
Die Einstecköffnung 11 sowie die Durchstecköffnung 7 sind schlüssellochartig ausgebildet.

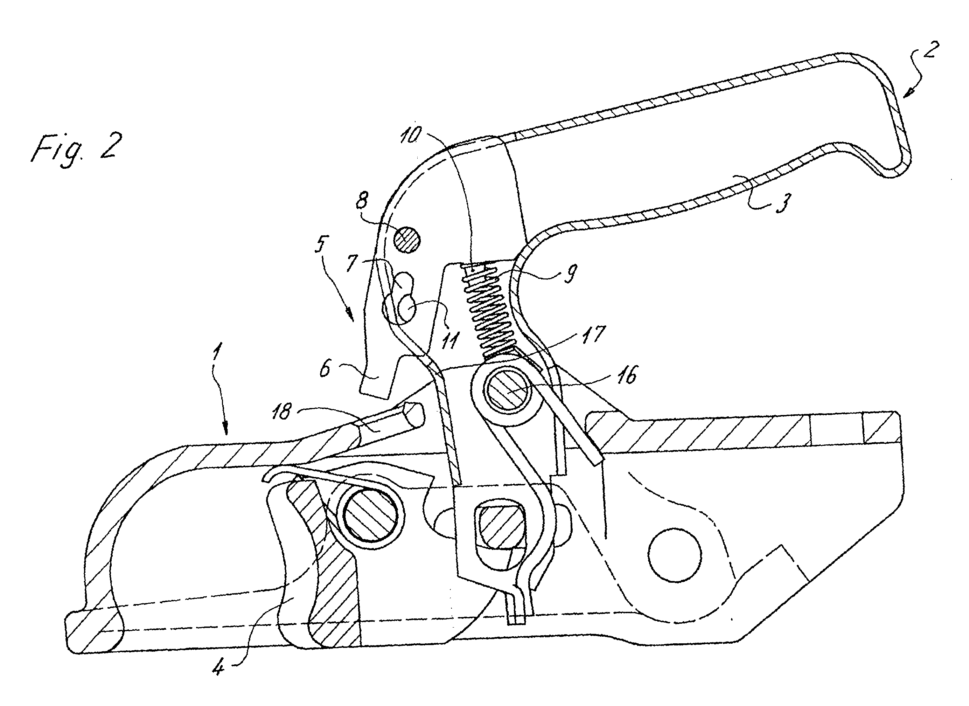

In entsicherter Position, um den Handgriff 2 zur Öffnung der Kugelpfanne verschwenken zu können, ist die Schließeinrichtung 13 entfernt und die Sperrklinke 5 kann von oben her durch Daumendruck soweit verschwenkt werden, daß sie aus dem Anlagebereich mit dem Kupplungsgehäuse 1 kommt. Diese Position ist in der Figur 2 sehr deutlich erkennbar.

Beim anschließenden Hochziehen des Handgriffs 2 taucht die Sperrnase 6 in eine Öffnung 18, die im Kupplungsgehäuse 1 vorgesehen ist.

Bei einem Nachlassen des Druckes auf die Sperrklinke 5 wird diese durch die Kraft der Feder 9 in ihre ursprüngliche Position zurückgeschwenkt, wie sie in der Figur 1 dargestellt ist.

Wie hier besonders deutlich zu erkennen ist, sind sowohl die Einstecköffnung 11 des Handgriffs 2 als auch die Durchstecköffnung 7 der Sperrklinke 5 so angeordnet, daß der eingesteckte Schließbolzen 14 spielfrei oder nahezu spielfrei an der Innenwandung der der Kugelpfanne 4 zugewandten Stirnseite des Handgriffs 2 anliegen kann.

Bei Gewaltanwendung, beispielsweise einem Schlag auf den aus dem Handgriff 2 herausragenden Teil der Sperrklinke 5 stützt sich der Schließbolzen 14 über die gesamte Stimseitenbreite des Handgriffs 2 an dieser ab, so daß ein Verbiegen des Schließbolzens 14 ausgeschlossen ist.

Auch ein Schlag auf die Sperrnase 6 bleibt auf den Schließbolzen 14 wirkungslos, da durch die unterseitige Begrenzung eines Spaltes 19, in dem die Sperrklinke 5 geführt ist, ein Anschlag 17 gebildet wird, an dem die Sperrnase 6 in Blockierstellung anliegt.

## Patentansprüche

1. Kugelkopfkupplung für einen Anhänger, mit einer mittels eines als Hohlkörper ausgebildeten Handgriffs (2) betätigbaren Kugelpfanne (4), die mit einer fahrzeugseitigen Kugel verbindbar ist, und einem handbetätigbaren, federbelasteten Sicherungsteil, mit dem in Schließstellung der Kugelpfanne (4) eine Verschwenkung des Handgriffs blockierbar ist, **dadurch gekennzeichnet, daß** das als Sperrklinke (5) ausgebildete Sicherungsteil den Handgriff (2) auf seiner dem Kupplungsgehäuse (1) abgewandten oberen Seite durchtritt und zu einem entriegelnden Verschwenken eindrückbar ist.

2. Kugelkopfkupplung nach Anspruch 1, mit einer in Schließstellung der Kugelpfanne (4) quer zur Verschwenkrichtung angeordneten, den Handgriff zumindest teilweise durchtretenden bolzenförmigen Schließeinrichtung (13), **dadurch gekennzeichnet, daß** die Schließeinrichtung (13) an der der Kugelpfanne (4) zugewandten stirnseitigen Innenwandung des Handgriffs (2) spielfrei oder nahezu spielfrei anliegt.

3. Kugelkopfkupplung nach Anspruch 1, **dadurch gekennzeichnet, daß** die als Steckschloß ausgebildete Schließeinrichtung (13) durch eine Einstecköffnung (11) des Handgriffs (2), eine Durchstecköffnung (7) der Sperrklinke (5) steckbar ist und dann in einer Ausnehmung (12), die in der der Einstecköffnung (11) gegenüberliegenden Seite des Handgriffs (2) vorgesehen ist, einliegt, wobei die Einstecköffnung (11) und die Durchstecköffnung (7) schlüssellochartig ausgebildet sind.

4. Kugelkopfkupplung nach Anspruch 1, **dadurch gekennzeichnet, daß** ein im Handgriff 2 vorgesehener Spalt (19), in dem die Sperrklinke (5) geführt ist, mit seiner Endbegrenzung einen Anschlag (17) bildet, an dem die Sperrklinke (5) Blockierstellung anliegt.

5. Kugelkopfkupplung nach Anspruch 1, **dadurch gekennzeichnet, daß** auf der Oberseite des Kupplungsgehäuses (1) eine Öffnung (18) vorgesehen ist, in die eine Sperrnase (6) der Sperrklinke (5) beim Hochschwenken des Handgriffs (2) eintaucht.

6. Kugelkopfkupplung nach Anspruch 1, **dadurch gekennzeichnet, daß** eine Feder (9) vorgesehen ist, die einerseits an der Sperrklinke (5) und andererseits am Handgriff (2) oder Teilen davon festgelegt ist.

7. Kugelkopfkupplung nach Anspruch 1, **dadurch gekennzeichnet, daß** die Sperrklinke (5) in eingedrückter Stellung an der Innenwandung des Handgriffs (2) anliegt.

## Claims

1. Ball-type coupling for a trailer, having a ball socket (4) which can be actuated by means of a handle (2), which is designed as a hollow body, and can be connected to a ball on the vehicle, and having a manually actuable, springed-loaded securing part with which pivoting of the handle can be blocked in the closed position of the ball socket (4), **characterized in that** the securing part, which is designed as a locking pawl (5), passes through the handle (2), on its upper side facing away from the coupling housing (1), and can be pressed in in order to release the handle for pivoting.

2. Ball-type coupling according to Claim 1, having a bolt-shaped closing device (13) which, in the closed position of the ball socket (4), is arranged transversely to the pivoting direction and at least partially passes through the handle, **characterized in that** the closing device (13) bears in a play-free manner or virtually play-free manner against that end inner wall of the handle (2) which faces the ball socket (4).

3. Ball-type coupling according to Claim 1, **characterized in that** the closing device (13), which is designed as a plug-in lock, can be plugged through a plug-in opening (11) of the handle (2), a plug-through opening (7) of the locking pawl (5) and then lies in a recess (12) which is provided **in that** side of the handle (2) which lies opposite the plug-in opening (11), the plug-in opening (11) and the plug-through opening (7) being designed in the manner of a keyhole.

4. Ball-type coupling according to Claim 1, **characterized in that** an end boundary of a gap (19), which is provided in the handle (2) and in which the locking pawl (5) is guided, forms a stop (17) against which the locking pawl (5) bears in a blocking position.

5. Ball-type coupling according to Claim 1, **characterized in that** an opening (18) is provided on the upper side of the coupling housing (1), into which opening a locking lug (6) of the locking pawl (5) enters when the handle (2) is pivoted upwards.

6. Ball-type coupling according to Claim 1, **characterized in that** a spring (9) is provided which is fixed at one end on the locking pawl (5) and at the other end on the handle (2) or parts thereof.

7. Ball-type coupling according to Claim 1, **characterized in that** the locking pawl (5) bears in the pressed-in position against the inner wall of the handle (2).

## Revendications

1. Accouplement à tête sphérique pour une remorque, comportant un coussinet sphérique (4) qui peut être actionné au moyen d'une poignée (2) conformée en corps creux et qui peut être relié à une sphère côté véhicule, ainsi qu'un élément de sécurité à actionnement manuel et soumis à l'action d'un ressort au moyen duquel on peut bloquer un pivotement de la poignée, en position de fermeture du coussinet sphérique (4), **caractérisé en ce que** l'élément de sécurité, conformé en cliquet d'arrêt (5), traverse la poignée (2) sur son côté supérieur tourné à l'opposé du boîtier de l'accouplement (1), et peut être enfoncé pour un pivotement de déverrouillage.

2. Accouplement à tête sphérique selon la revendication 1, comportant un dispositif de fermeture (13) en forme de doigt disposé, en position de fermeture du coussinet sphérique (4), perpendiculairement à la direction de pivotement et traversant la poignée au moins partiellement, **caractérisé en ce que** le dispositif de fermeture (13) s'applique sans jeu ou presque sans jeu contre la paroi intérieure frontale, tournée vers le coussinet sphérique (4), de la poignée (2).

3. Accouplement à tête sphérique selon la revendication 1, **caractérisé en ce que** le dispositif de fermeture (13), conformé en serrure à encastrer, peut être encastré à travers une ouverture d'introduction (11) de la poignée (2), une ouverture traversante (7) du cliquet d'arrêt (5) et se place ensuite dans un évidement (12) qui est prévu dans le côté de la poignée (2) opposé à l'ouverture d'introduction (11), l'ouverture d'introduction (11) et l'ouverture traversante (7) étant conformées en trou de serrure.

4. Accouplement à tête sphérique selon la revendication 1, **caractérisé en ce qu'**une fente (19) prévue dans la poignée (2) et dans laquelle est guidé le cliquet d'arrêt (5), forme avec sa délimitation d'extrémité une butée (17) contre laquelle s'applique le cliquet d'arrêt (5) en position de blocage.

5. Accouplement à tête sphérique selon la revendication 1, **caractérisé en ce que** sur le côté supérieur du boîtier de l'accouplement (1) est prévue une ouverture (18) dans laquelle s'engage un ergot d'arrêt (6) du cliquet d'arrêt (5) lorsque la poignée (2) est pivotée vers le haut.

6. Accouplement à tête sphérique selon la revendication 1, **caractérisé en ce qu'**il est prévu un ressort (9) qui est fixé d'une part au cliquet d'arrêt (5) et d'autre part à la poignée (2) ou à des parties de celle-ci.

7. Accouplement à tête sphérique selon la revendication 1, **caractérisé en ce que** le cliquet d'arrêt (5) s'applique, en position enfoncée, contre la paroi intérieure de la poignée (2).
